# EUROPÄISCHE PATENTSCHRIFT

(11) **EP 3 162 180 B1**
(45) Veröffentlichungstag und Bekanntmachung des Hinweises auf die Patenterteilung: **03.10.2018**
(21) Anmeldenummer: 16401069.6
(22) Anmeldetag: 21.10.2016
(51) Int. Cl.: A01D 34/54, A01B 45/02

(54) **MOBILE BEARBEITUNGSEINHEIT ZUR PFLEGE VON GRÜNFLÄCHEN**
MOBILE MACHINING UNIT FOR THE CULTIVATION OF GREEN AREAS
UNITÉ DE TRAITEMENT MOBILE DESTINÉE À L'ENTRETIEN D'ESPACES VERTS

(30) Priorität: 28.10.2015 DE 102015118366
(43) Veröffentlichungstag der Anmeldung: 03.05.2017
(73) Patentinhaber: Amazonen-Werke H. Dreyer GmbH & Co. KG, 49205 Hasbergen (DE)
(72) Erfinder: Klein, Laurent, 57910 HAMBACH (FR)

(56) Entgegenhaltungen:
- DE-A1- 2 850 215
- DE-A1- 19 756 720
- DE-U1-202004 011 193
- US-A- 2 671 300

## Beschreibung

Die Erfindung betrifft eine mobile Bearbeitungseinheit zur Pflege von Grünflächen nach dem Oberbegriff des Patentanspruches 1.

Eine entsprechende mobile Bearbeitungseinheit zur Pflege von Grünflächen ist durch die DE 28 50 215 A1 bekannt. Diese Bearbeitungseinheit weist einen um die Rotationsachse drehbar gelagerten und Bodenbearbeitungswerkzeuge aufweisenden Bearbeitungsrotor sowie ein um eine Schwenkachse in seiner Höhenlage relativ zu dem Gehäuse veränderbaren Höhenführungsrahmen auf. Die Schwenkachse des Höhenführungsrahmens ist koaxial zur Rotationsachse des Bearbeitungsrotors angeordnet. Dem Höhenführungsrahmen ist ein Tragarm zugeordnet, der über eine Fixierungseinrichtung in mehreren Positionen arretierbar ist. An dem Tragarm des Höhenführungsrahmens ist ein das Führungselement aufnehmender, in seiner Position veränderbarer Halter schwenkbeweglich gelagert. Der Halter ist hier für die Verstellung nicht ausreichend sicher geführt.

Eine weitere mobile Bearbeitungseinheit zur Pflege von Grünflächen, insbesondere von Rasen- und Wiesenflächen, ist bereits in der EP°0 712 568°B1 beschrieben. Die Bearbeitungseinheit wird hierbei mit einem angetriebenen Fahrzeug gekoppelt und als "Mähwerk" bezeichnet. Sie besteht nach dem Offenbarungsgehalt der Druckschrift aus einem quer zu der Bewegungsrichtung der Bearbeitungseinheit ausgerichteten, um eine Rotationsachse drehbaren und Bearbeitungswerkzeuge aufweisenden Bearbeitungsrotor, der in einem Gehäuse angeordnet ist. Der Bearbeitungsrotor verfügt entlang seines Außenumfanges über eine Vielzahl einzelner Bearbeitungswerkzeuge, die je nach Ausführung dazu geeignet sind, die Grünfläche zu pflegen, das heißt, beispielsweise einen Rasen abzumähen, ihn zu vertikutieren oder einfach Laub beziehungsweise Unrat aufzusammeln. Bezogen auf die Bewegungsrichtung sind vor und hinter dem Bearbeitungsrotor durch einen Höhenführungsrahmen verbundene Führungselemente vorhanden, wobei es sich hierbei einerseits um frontseitige, pendelnd gelagerte Räder und diesen gegenüberliegend, also rückseitig des Bearbeitungsrotors, um eine Tiefenführungsrolle handelt. Zur Einstellung der Arbeitshöhe des Bearbeitungsrotors und damit der Schnitthöhe weist die Vorrichtung zur Pflege von Grünflächen nach der EP°0 712 568 B1 ferner eine Verstelleinrichtung auf.

Die Arbeitsweise derartiger mobiler Bearbeitungseinheiten gestaltet sich dabei allgemein so, dass die von dem Bearbeitungsrotor abgetrennten oder aufgenommenen Bestandteile der Grünfläche durch die Rotationsbewegung des Bearbeitungsrotors und gegebenenfalls unter Zuhilfenahme von hierzu geeigneten Fördereinrichtungen beispielsweise in einen Auffangbehälter abtransportiert werden.

Die EP°0 712 568 B1 beschreibt ebenfalls eine mobile Bearbeitungseinheit zur Pflege von Grünflächen, die mit einem Fahrzeug koppelbar ist, das einen Antriebsmotor aufweist. In dem Gehäuse der mobilen Bearbeitungseinheit ist quer zu ihrer Bewegungsrichtung ein um eine Rotationsachse drehbar gelagerter, Bearbeitungswerkzeuge aufweisender Bearbeitungsrotor angeordnet. Darüber hinaus verfügt diese mobile Bearbeitungseinheit über einen Höhenführungsrahmen, der, in Bewegungsrichtung betrachtet vor dem Bearbeitungsrotor als Räder ausgebildete Führungselemente und hinter dem Bearbeitungsrotor eine Tiefenführungsrolle in Form einer Walze aufweist. Mit Hilfe eines Verstellmechanismus kann der Höhenführungsrahmen dabei in seiner Höhenlage relativ zum Gehäuse verändert werden, so dass dadurch die Bearbeitungshöhe der im Fall der EP 0 712 568°B1 als Vertikutiereinrichtung ausgeführten Bearbeitungseinheit einstellbar ist. Die Verstelleinrichtung weist hierzu eine manuell verstellbare Spindel auf, die mit einer aufwändigen Hebelmechanik zusammenwirkt, so dass durch Betätigung der Verstelleinrichtung die genannte Höheneinstellung der Bearbeitungshöhe vorgenommen werden kann. Durch die zum Einsatz kommende Hebelmechanik ist eine Vielzahl unterschiedlicher Bauelemente und sind insbesondere mehrere Gelenke erforderlich, so dass nicht nur die Montage einer derartigen Verstelleinrichtung des Höhenführungsrahmens aufwändig ist. Vielmehr stellt sich hierbei auch das Problem, dass die Anfälligkeit einer derartigen Bearbeitungseinheit für Verschleiß mit der Zahl der Bauteile zunimmt, so dass der Wartungsaufwand insgesamt ansteigt.

Der Erfindung liegt die Aufgabe zugrunde, eine mobile Bearbeitungseinheit zur Pflege von Grünflächen bereitzustellen, bei der die Höhenverstellung des Höhenführungsrahmens und damit der Aufbau der gesamten mobilen Bearbeitungseinheit insgesamt vereinfacht ist.

Die Erfindung löst diese Aufgabenstellung mit den Merkmalen des Patentanspruches 1.

Weitere Ausgestaltungen der Erfindung sind Gegenstand der Unteransprüche.

Eine mobile Bearbeitungseinheit zur Pflege von Grünflächen, insbesondere von Rasen- und Wiesenflächen, die einen quer zu ihrer Bewegungsrichtung ausgerichteten, in einem Gehäuse aufgenommenen, um eine Rotationsachse drehbar gelagerten und Bearbeitungswerkzeuge aufweisenden Bearbeitungsrotor sowie einen um eine Schwenkachse in seiner Höhenlage relativ zu dem Gehäuse veränderbaren Höhenführungsrahmen mit wenigstens einem Führungselement umfasst, wobei die Änderung der Höhenlage des Höhenführungsrahmens mittels eines Verstellmechanismus ermöglicht ist, wurde erfindungsgemäß dahingehend weitergebildet, dass die Schwenkachse des Höhenführungsrahmens koaxial zur Rotationsachse des Bearbeitungsrotors angeordnet ist.

Zunächst wird durch die erfindungsgemäße Anordnung der Schwenkachsen des Höhenführungsrahmens koaxial zur Rotationsachse des Bearbeitungsrotors eine verbesserte und auf die Bodenkontur abgestimmte Höhenführung des Bodenbearbeitungsrotors gegenüber der Bodenoberfläche erreicht.

Weiterhin ist durch diese spezielle Anordnung der Schwenkachse des Höhenführungsrahmens keine aufwändige Hebelmechanik mehr erforderlich. Die mobile Bearbeitungseinheit vereinfacht sich damit insgesamt, da weniger Bauteile zum Einsatz kommen. Dies führt insbesondere dazu, dass sich der Montageaufwand bei der Herstellung der mobilen Bearbeitungseinheit und der über ihre Lebensdauer hinweg erforderliche Wartungsaufwand in entscheidendem Maße reduzieren.

Die Anordnung der Schwenkachse koaxial zur Rotationsachse bedeutet erfindungsgemäß, dass es sich bei der Rotationsachse des Bearbeitungsrotors und der Schwenkachse des Höhenführungsrahmens um zwei separate Bauteile in Form je einer Achse handeln kann, deren Anordnung, geometrisch betrachtet, koaxial zueinander ist. Dies bedeutet jedoch nicht, dass hierfür stets zwei unterschiedliche Bauteile in Form einer Rotationsachse und einer Schwenkachse Verwendung finden müssen. Vielmehr können der Bearbeitungsrotor und der Höhenführungsrahmen auch baulich eine gemeinsame Achse aufweisen.

Eine erste weiterbildende Maßnahme der Erfindung geht dahin, dass die Rotationsachse des Bearbeitungsrotors als Schwenkachse des Höhenführungsrahmens ausgeführt ist beziehungsweise die Schwenkachse bildet. Hierbei wurde der Gedanke einer gemeinsamen Achse der Rotationsachse des Bearbeitungsrotors und des Höhenführungsrahmens verfolgt. Eine derartige Ausführung gestaltet sich besonders einfach und wartungsarm.

Gemäß einer anderen erfindungsgemäßen Ausgestaltung wird vorgeschlagen, dass der Höhenführungsrahmen mindestens ein, in Bewegungsrichtung der Bearbeitungseinheit betrachtet, vor dem Bearbeitungsrotor angeordnetes Führungselement und wenigstens ein Führungselement hinter dem Bearbeitungsrotor aufweist. Insbesondere kann es sich bei dem in Bewegungsrichtung der Bearbeitungseinheit betrachtet vor dem Bearbeitungsrotor angeordneten Führungselement um wenigstens ein Rad, vorzugsweise um ein Pendelrad und bei dem Führungselement hinter dem Bearbeitungsrotor vorzugsweise um eine Tiefenführungsrolle handeln. Die Verwendung von Pendelrädern als Führungselemente hat den Vorzug, dass dadurch eine optimale Beweglichkeit der mobilen Bearbeitungseinheit gegeben ist. Die Tiefenführungsrolle hat die Aufgabe, eine Glättung des bearbeiteten Untergrundes zu erzielen.

Die vorhandene Verstelleinrichtung ermöglicht auf einfache Weise, eine Höhenverstellung des Höhenführungsrahmens vorzunehmen, was beispielsweise für die Veränderung der Schnitthöhe bei einem Mähwerk von entscheidender Bedeutung ist. Diese Maßnahme allein ist allerdings nicht ausreichend, da die angewählte Höhenposition auch für die Dauer der Bearbeitung fixiert werden sollte. Zwar weist die Verstelleinrichtung unter Umständen eine gewisse Selbsthemmung auf. Diese kann jedoch infolge der während der Bearbeitung der Grünfläche entstehenden Erschütterungen nicht immer hundertprozentig zuverlässig sein. Es gilt jedoch zu vermeiden, dass sich die Höheneinstellung des Höhenführungsrahmens während der Pflege der Grünfläche verändert, weil dies zu einer qualitativ minderwertigen Pflege führen würde. Deshalb geht ein weiterer Lösungsvorschlag nach der Erfindung dahin, einen um die Schwenkachse bewegbar gelagerten Tragarm des Höhenführungsrahmens vorzusehen, der über eine Fixierungseinrichtung in mehreren Positionen arretierbar ist. Außerdem erweitert dies eine verbesserte Anpassung an die verschiedensten Einsatzbedingungen.

Als Fixierungseinrichtung kann dabei beispielsweise sowohl ein stufenlos verstellbarer Klemmmechanismus, als auch ein Lochblech zum Einsatz kommen, in dessen Löcher ein Fixierungsstift einführbar ist. Selbstverständlich ist es auch möglich, andere, äquivalente Mechanismen einzusetzen, die eine Fixierung des Höhenführungsrahmens in unterschiedlichen Höhenlagen ermöglichen. Die genannten Beispiele sind deshalb nicht zwingend als abschließend zu betrachten.

Eine alternative oder ergänzende Möglichkeit der Veränderung der Bearbeitungshöhe des Bearbeitungsrotors besteht darüber hinaus darin, dass an dem Tragarm des Höhenführungsrahmens ein das mindestens eine Führungselement aufnehmender, in seiner Position veränderbarer Halter schwenkbeweglich gelagert ist.

Hierzu kam der Halter in bevorzugter Weise ein Langloch aufweisen, das eine Gleitführung für die Positionsveränderung des Halters bildet.

Wie zuvor bereits erwähnt wurde, ist es bereits bekannt, die Höhenverstellung des Bearbeitungsrotors beispielsweise mittels einer Spindel vorzunehmen, die manuell betätigt wird. Ein weiterführender Vorschlag der Erfindung geht zur Erleichterung der Arbeit mit der mobilen Bearbeitungseinheit zur Pflege von Grünflächen und zur Erhöhung des Automatisierungsgrades daher dahin, die Verstelleinrichtung mit einer mechanisch, hydraulisch oder elektromotorisch ansteuerbaren Spindel und sonstigen geeigneten Stellelemente auszustatten. Der Nutzer der Vorrichtung zur Pflege von Grünflächen kann somit während der Bearbeitung der Grünfläche jederzeit und flexibel eine Verstellung der Arbeitshöhe des Bearbeitungsrotors vornehmen, ohne die Arbeit unterbrechen zu müssen.

Die Erfindung wird nachfolgend anhand der beigefügten Zeichnungen näher erläutert. Das gezeigte Ausführungsbeispiel stellt dabei keine Einschränkung auf die dargestellte Variante dar, sondern dient lediglich der Erläuterung eines Prinzips der Erfindung.

Gleiche oder gleichartige Bauteile werden stets mit denselben Bezugsziffern bezeichnet. Um die erfindungsgemäße Funktionsweise veranschaulichen zu können, sind in den Figuren nur stark vereinfachte Prinzipdarstellungen gezeigt, bei denen auf die für die Erfindung nicht wesentlichen Bauteile verzichtet wurde. Dies bedeutet jedoch nicht, dass derartige Bauteile bei einer erfindungsgemäßen Lösung nicht vorhanden sind.

Es zeigt:
- Fig. 1:: eine Seitenansicht einer mobilen Bearbeitungseinheit mit einem mit der mobilen Bearbeitungseinheit gekoppelten Fahrzeug in teilweise geschnittener Ausführung und unter Weglassung einiger Verkleidungsteile,
- Fig. 2:: die mobile Bearbeitungseinheit aus Fig. 1 als separierte Baueinheit,
- Fig. 3:: ausschnittsweise den frontseitigen Abschnitt der mobilen Bearbeitungseinheit aus Fig. 2,
- Fig. 4:: die vergrößerte Darstellung aus Fig. 3, jedoch unter Weglassung einzelner Teile,
- Fig. 5:: die mobile Bearbeitungseinheit gemäß Fig. 2, jedoch mit veränderter Position des Höhenführungsrahmens,
- Fig. 6:: ausschnittsweise den frontseitigen Abschnitt der mobilen Bearbeitungseinheit aus Fig. 5
und
- Fig. 7:: die vergrößerte Darstellung aus Fig. 6, jedoch unter Weglassung einzelner Teile.

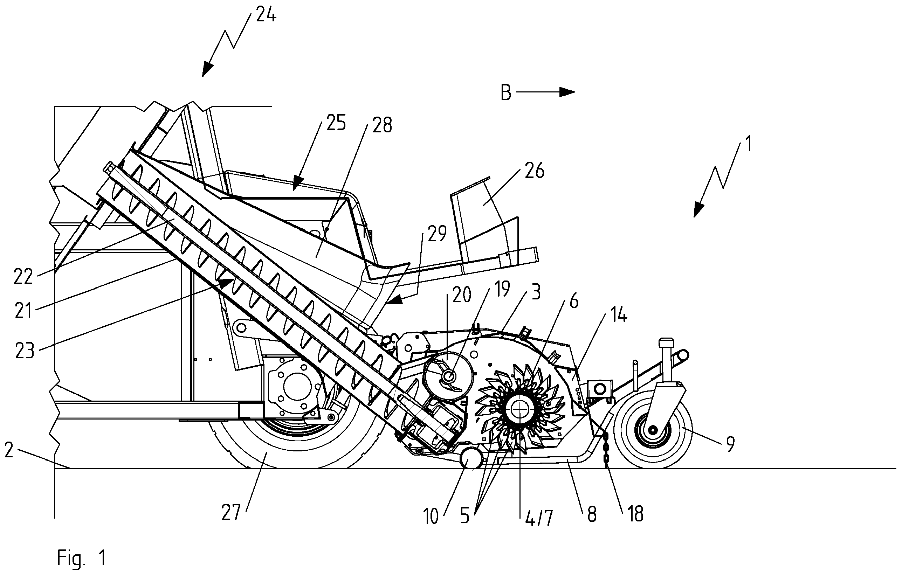

Aus der Fig. 1 geht eine schematisch stark vereinfachte Seitenansicht einer mobilen Bearbeitungseinheit 1 zur Pflege einer Grünfläche 2 mit einem mit der mobilen Bearbeitungseinheit 1 gekoppelten Fahrzeug 24 in teilweise geschnittener Ausführung und unter Weglassung einiger Verkleidungsteile hervor. Die mobile Bearbeitungseinheit 1 ist im vorliegenden Fall als ein Mähwerk ausgeführt und verfügt in Ihrem frontseitigen Abschnitt über zwei koaxial zueinander angeordnete und pendelnd gelagerte Führungselemente 9, bei denen es sich hier um Räder handelt, mittels derer die mobile Bearbeitungseinheit 1 bewegt werden kann. Auf ihrer der Bewegungsrichtung B abgewandten Rückseite verfügt die mobile Bearbeitungseinheit 1 ferner über ein weiteres Führungselement 10, das im vorliegenden Fall aus einer walzenartigen Tiefenführungsrolle besteht. Oberhalb der Tiefenführungsrolle 10 befindet sich ein unter einem Neigungswinkel angeordnetes Förderrohr 21, in dem eine Fördereinrichtung 23 in Form einer Förderschnecke um eine Schneckenachse 22 drehbar gelagert ist. Die Aufgabe dieser Fördereinrichtung 23 besteht darin, die von einem Bearbeitungsrotor 6 abgetrennten oder aufgesammelten Bestandteile der zu pflegenden Grünfläche 2 abzutransportieren und beispielsweise in einen an dem Fahrzeug 24 vorhandenen, in der Fig. 1 jedoch nicht gezeigten Auffangbehälter abzuführen.

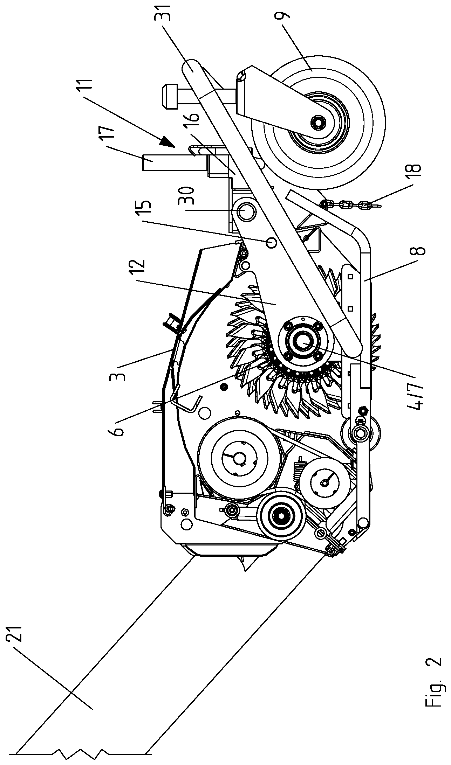

Die eigentliche Bearbeitung der Grünfläche 2 erfolgt dabei durch den Bearbeitungsrotor 6, der in einem Gehäuse 3 der mobilen Bearbeitungseinheit 1 um eine Rotationsachse 4 drehbar gelagert ist und entlang seines Außenumfanges eine Vielzahl einzelner Bearbeitungswerkzeuge 5 aufweist. Die auf diese Weise von der Grünfläche 2 abgetrennten oder aufgenommenen Bestandteile werden innerhalb des Gehäuses 3 zu einer Transportschnecke 20 befördert, die ihrerseits um eine quer zur Bewegungsrichtung B der mobilen Bearbeitungseinheit 1 angeordnete Schneckenachse 19 drehbar ausgeführt ist und deren Funktion darin besteht, die losen Bestandteile der Grünfläche etwa mittig zu zentrieren, um sie in diesem Bereich an die zuvor bereits erwähnte Förderschnecke 23 zu übergeben. Die mobile Bearbeitungseinheit 1 gemäß Fig. 1 weist darüber hinaus einen Höhenführungsrahmen 8 auf, dessen Schwenkachse 7 koaxial zur Rotationsachse 4 des Bearbeitungsrotors 6 angeordnet ist, was deutlicher aus den Darstellungen der Figuren 2-7 hervorgeht. Mittels eines aus der Fig. 1 ebenfalls nicht hervorgehenden Verstellmechanismus 11 kann die Bearbeitungshöhe des Bearbeitungsrotors 6 verändert werden. Um eine einmal eingestellte Bearbeitungshöhe des Bearbeitungsrotors 6 während der Pflege der Grünfläche 2 beibehalten zu können, ist darüber hinaus eine Fixierungseinrichtung 13 vorhanden, die bei dem in Fig. 1 dargestellten Ausführungsbeispiel aus einem Lochblech 14 besteht, in dessen bogenförmig aufeinanderfolgend angeordnete Löcher ein Fixierungsstift 15 eingeführt wird, so dass dadurch die Höhenlage des Höhenführungsrahmens 8 verändert werden kann. Im Bereich des vorderen Führungselementes 9, in Form des pendelnd gelagerten Rades, ist unterhalb des Höhenführungsrahmens 8 an diesem ferner ein Schlagschutz 18 angeordnet, der aus einem sich über die gesamte Breite der mobilen Bearbeitungseinheit 1 erstreckenden Vorhang aus einzelnen, unmittelbar aneinander angrenzenden Kettensegmenten besteht. Dieser Schlagschutz 18 verhindert, dass von dem Bearbeitungsrotor 6 aufgeworfene Bestandteile der Grünfläche 2 unkontrolliert in die Umgebung geschleudert werden und damit möglicherweise umstehende Personen verletzen oder umliegende Gegenstände beschädigen.

Ein bei dem in Fig. 1 gezeigten Beispiel bestehender Vorteil ist in der Möglichkeit zu sehen, dass das Fahrzeug 24 und die mobile Bearbeitungseinheit 1 voneinander getrennt werden können. Dadurch wird beispielsweise der Transport der Bearbeitungseinheit 1 erheblich vereinfacht. Das Fahrzeug 24 wird hierbei durch einen eigenen Antriebsmotor angetrieben und weist zu seiner Fortbewegung sämtliche, für ein derartiges Fahrzeug erforderlichen Bauteile auf, um beispielsweise auch im Straßenverkehr bewegt werden zu können. Selbstverständlich sind auch Ausführungen des Fahrzeugs 24 möglich, die mittels eines Transporters an den Ort der Bearbeitung einer Grünfläche 2 verbracht werden. Bei derartigen Fahrzeugen 24 sind beispielsweise keine Fahrzeugbeleuchtungen erforderlich, da diese nicht im öffentlichen Straßenverkehr bewegt werden müssen.

Bei dem in der Fig. 1 gezeigten Fahrzeug 24 wurden aus Vereinfachungsgründen verschiedene Verkleidungsteile beziehungsweise Bestandteile nicht zeichnerisch dargestellt. So weist dieses Fahrzeug 24 beispielsweise lediglich eine Fläche 25 für eine Sitzmontage auf. Anders ausgedrückt ist die Fläche 25 dazu geeignet, einen Fahrersitz zu montieren. Weiterhin verfügt das Fahrzeug 24 frontseitig, also vor der Fläche 25 für die Sitzmontage über einen Unterbau 26, der zur Anbringung einer Lenkeinrichtung, also beispielsweise eines Lenkrades mit einer Lenksäule dient.

Zur Verbindung der mobilen Bearbeitungseinheit 1 mit dem Fahrzeug 24 weist das Fahrzeug 24 in seinem frontseitigen Bereich unterhalb des Unterbaus 26 für die Lenkeinrichtung und mittig zwischen den in der Fig. 1 gezeigten Fahrzeugrädern 27 eine Führungshülse 28 auf, deren öffnungsseitiger Mündungsbereich 29 über einen trichterförmig erweiterten Querschnitt verfügt. Anders ausgedrückt ist die Führungshülse 28 derart gestaltet, dass sich in Einführungsrichtung der Fördereinrichtung 23 betrachtet, ihr Querschnitt in Längsrichtung verjüngt. Das Förderrohr 21 wird zusammen mit der darin enthaltenen Fördereinrichtung 23 in die Führungshülse 28 eingeführt, wobei gleichzeitig eine Kopplung zwischen Fahrzeug 24 und mobiler Bearbeitungseinheit 1 hergestellt wird. Nach dem Einführen der Fördereinrichtung 23 in die Führungshülse 28 und der Herstellung einer lösbaren Kupplung zwischen Fahrzeug 24 und mobiler Bearbeitungseinheit 1 kann die Pflege der Grünfläche 2 erfolgen.

Die in der Fig. 2 dargestellte mobile Bearbeitungseinheit 1 entspricht der Ausführung in Fig. 1, wobei hier die mobile Bearbeitungseinheit 1 als separierte Baueinheit gezeigt ist. Darüber hinaus sind in der Fig. 2 einzelne, in der Fig. 1 nicht verdeutlichte Bauelemente dargestellt. Insbesondere ist hierbei ein Tragarm 12 des Höhenführungsrahmens 8 zu erwähnen, der verdeutlicht, dass die Schwenkachse 7 des Höhenführungsrahmens 8 koaxial mit der Rotationsachse 4 des Bearbeitungsrotors 6 zusammenfällt. Der Tragarm 12 ist als ein Hebelarm ausgeführt, an dessen der Schwenkachse 7 gegenüberliegendem Ende ein Gelenklager 30 vorhanden ist, um das ein Halter 16 verschwenkbar ist, der eine Verbindung zu dem als Rad ausgeführten Führungselement 9 darstellt. Der Verstellmechanismus 11 weist im vorliegenden Beispiel eine Spindel 17 auf, über die die Höhenverstellung des Höhenführungsrahmens 8 ermöglicht wird.

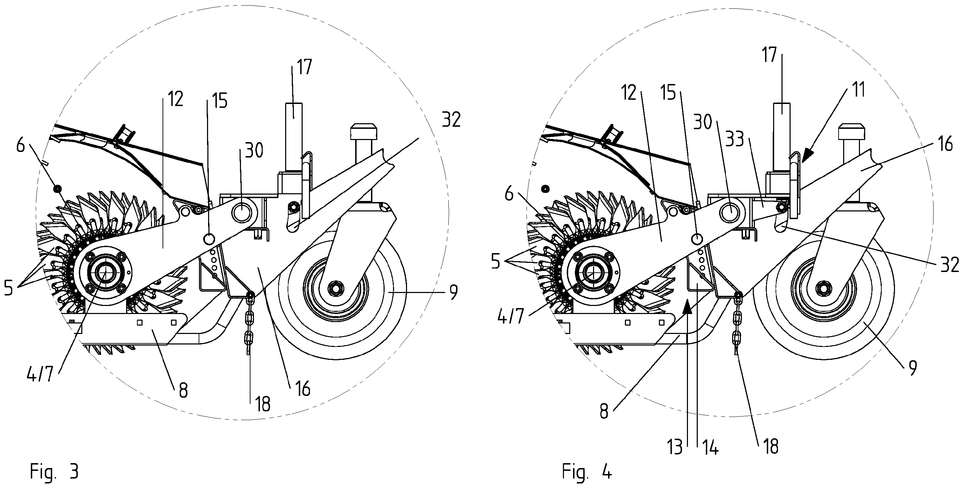

In der Darstellung in Fig. 3 ist ausschnittsweise der frontseitige Abschnitt der mobilen Bearbeitungseinheit 1 aus Fig. 2 gezeigt, wobei der in Fig. 2 erkennbare Bügel 31 des Höhenführungsrahmens 8 hier nicht dargestellt wurde, um dadurch einen besseren Blick auf den Halter 16 zu ermöglichen. Der Halter 16 verfügt in diesem Abschnitt über ein Langloch 32, das im vorliegenden Beispiel eine bogenförmige Gestalt aufweist. Das Langloch 32 bildet eine Gleitführung für die Positionsveränderung des Halters 16. Da das Führungselement 9 in Form eines pendelnd gelagerten Rades an dem Halter 16 befestigt ist, kann mittels der Verschwenkung des Halters 16 um das Gelenklager 30 eine Veränderung der Position des Rades 9 vorgenommen werden.

Die Fig. 4 veranschaulicht die vergrößerte Darstellung aus Fig. 3, jedoch unter Weglassung einzelner Teile der mobilen Bearbeitungseinheit 1. Deutlicher, als aus der Fig. 3 geht hierbei die Möglichkeit der Arretierung des Höhenführungsrahmens 8 in unterschiedlichen Höhenlagen hervor. Diese wird realisiert, durch eine Fixierungseinrichtung 13, die im vorliegenden Fall aus einem am Gehäuse 3 angeordneten Lochblech 14 besteht, das eine Reihe nebeneinander angeordneter Löcher aufweist, in die von der Außenseite des Tragarmes 12 her ein Fixierungsstift 15 eingeführt werden kann, der somit auch den Tragarm 12 durchgreift. Auf diese Weise lassen sich verschiedene Höheneinstellungen des Höhenführungsrahmens 8 vornehmen. Die Fixierungseinrichtung 13 in Form eines Lochbleches 14 stellt dabei eine baulich sehr einfache Ausführungsvariante dar.

Aus der Fig. 4 geht darüber hinaus auch hervor, dass der Tragarm 12 über das Gelenklager 30 hinaus eine Verlängerung 33 aufweist, deren Ende in das Langloch 32 eingesetzt ist.

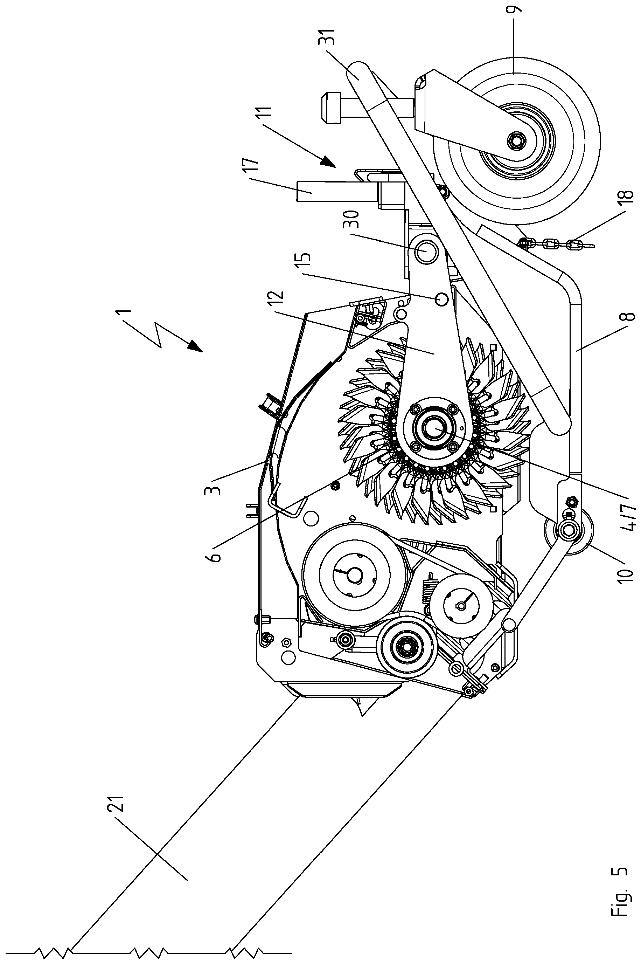

Die in der Fig. 5 gezeigte mobile Bearbeitungseinheit 1 entspricht der Darstellung in Fig. 2, jedoch weist der Höhenführungsrahmen 8 hierbei eine veränderte Position auf. In dieser Ansicht ist auch der Bügel 31 des Höhenführungsrahmens 8 wieder eingezeichnet.

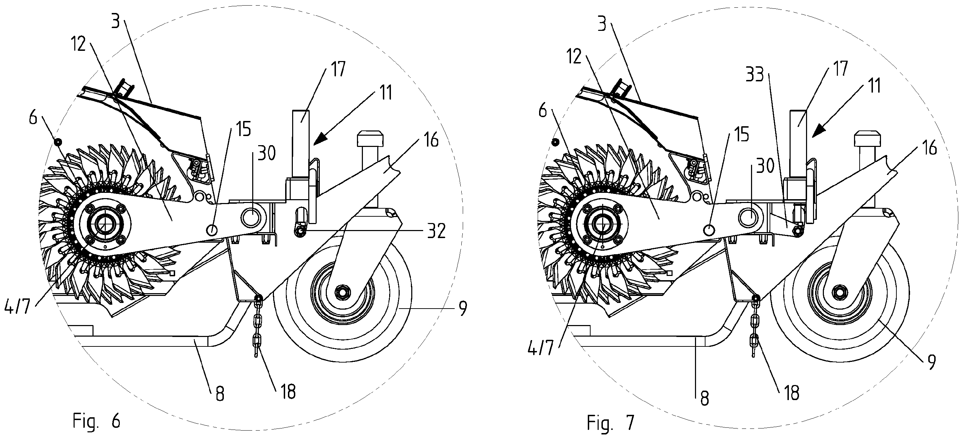

Aus der Fig. 6 geht ausschnittsweise der frontseitige Abschnitt der mobilen Bearbeitungseinheit 1 aus Fig. 5 hervor, wobei hier der Bügel 31 wiederum nicht gezeigt ist, so dass ein Blick auf das Langloch 32 im Halter 16 möglich wird.

Die Fig. 7 zeigt noch einmal die vergrößerte Darstellung aus Fig. 6, jedoch unter Weglassung einzelner Teile, so beispielsweise des Bügels 31 und eines Teils des Halters 16, so dass der Blick auf die Verlängerung 33 des Tragarmes 12 frei wird.

### BEZUGSZEICHENLISTE:

- 1: Bearbeitungseinheit
- 2: Grünfläche
- 3: Gehäuse
- 4: Rotationsachse
- 5: Bearbeitungswerkzeug
- 6: Bearbeitungsrotor
- 7: Schwenkachse
- 8: Höhenführungsrahmen
- 9: Führungselement (Rad)
- 10: Führungselement (Tiefenführungsrolle)
- 11: Verstellmechanismus
- 12: Tragarm
- 13: Fixierungseinrichtung
- 14: Lochblech
- 15: Fixierungsstift
- 16: Halter
- 17: Spindel
- 18: Schlagschutz
- 19: Schneckenachse
- 20: Transportschnecke
- 21: Förderrohr
- 22: Schneckenachse
- 23: Förderschnecke
- 24: Fahrzeug
- 25: Fläche für Sitzmontage
- 26: Unterbau
- 27: Fahrzeugrad
- 28: Führungshülse
- 29: Mündungsbereich
- 30: Gelenklager
- 31: Bügel
- 32: Langloch
- 33: Verlängerung

## Patentansprüche

1. Mobile Bearbeitungseinheit (1) zur Pflege von Grünflächen (2), insbesondere von Rasen- und Wiesenflächen, die einen quer zu ihrer Bewegungsrichtung (B) ausgerichteten, in einem Gehäuse (3) aufgenommenen, um eine Rotationsachse (4) drehbar gelagerten und Bearbeitungswerkzeuge (5) aufweisenden Bearbeitungsrotor (6) sowie einen um eine Schwenkachse (7) in seiner Höhenlage relativ zu dem Gehäuse (3) veränderbaren Höhenführungsrahmen (8) mit wenigstens einem Führungselement (9, 10) umfasst, wobei die Änderung der Höhenlage des Höhenführungsrahmens (8) mittels eines Verstellmechanismus (11) ermöglicht ist, **wobei** die Schwenkachse (7) des Höhenführungsrahmens (8) koaxial zur Rotationsachse (4) des Bearbeitungsrotors (6) angeordnet ist, ein um die Schwenkachse (7) bewegbar gelagerter Tragarm (12) des Höhenführungsrahmens (8) über eine Fixierungseinrichtung (13) in mehreren Positionen arretierbar ist, wobei an dem Tragarm (12) des Höhenführungsrahmens (8) ein das mindestens eine Führungselement (9) aufnehmender, in seiner Position veränderbarer Halter (16) schwenkbeweglich gelagert ist, **dadurch gekennzeichnet, dass** der Halter (16) ein Langloch (32) aufweist, das eine Gleitführung für die Positionsveränderung des Halters (16) bildet.

2. Mobile Bearbeitungseinheit nach Anspruch 1, **dadurch gekennzeichnet, dass** die Rotationsachse (4) des Bearbeitungsrotors (6) als Schwenkachse (7) des Höhenführungsrahmens (8) ausgeführt ist beziehungsweise die Schwenkachse (7) bildet.

3. Mobile Bearbeitungseinheit nach einem der vorstehend genannten Ansprüche, **dadurch gekennzeichnet, dass** der Höhenführungsrahmen (8) mindestens ein in Bewegungsrichtung (B) der Bearbeitungseinheit (1) betrachtet vor dem Bearbeitungsrotor (6) angeordnetes Führungselement (9) und wenigstens ein Führungselement (10) hinter dem Bearbeitungsrotor (6) aufweist.

4. Mobile Bearbeitungseinheit nach einem der vorstehend genannten Ansprüche, **dadurch gekennzeichnet, dass** es sich bei einem in Bewegungsrichtung (B) der Bearbeitungseinheit (1) betrachtet vor dem Bearbeitungsrotor (6) angeordneten Führungselement (9) um ein Rad, vorzugsweise um ein Pendelrad und bei einem Führungselement (10) hinter dem Bearbeitungsrotor (6) vorzugsweise um eine Tiefenführungsrolle handelt.

5. Mobile Bearbeitungseinheit nach Anspruch 1, **dadurch gekennzeichnet, dass** die Fixierungseinrichtung (13) aus einem vorzugsweise stufenlos verstellbaren Klemmmechanismus oder aus einem Lochblech (14) besteht, in dessen Löcher ein Fixierungsstift (15) einführbar ist.

6. Mobile Bearbeitungseinheit nach einem der vorstehend genannten Ansprüche, **dadurch gekennzeichnet, dass** der Verstellmechanismus (11) eine mechanisch, hydraulisch oder elektromotorisch ansteuerbare Spindel (18) und/oder Stellelement aufweist.

## Claims

1. Mobile treatment unit (1) for maintaining green areas (2), in particular lawn and meadow areas, which comprises a treatment rotor (6) which is oriented transversely with respect to the direction of movement (B) of said treatment unit, is accommodated in a housing (3), is mounted rotatably about an axis of rotation (4) and has treatment tools (5), and a height-guiding frame (8) which is changeable about a pivot axis (7) in its height position relative to the housing (3) and has at least one guiding element (9, 10), wherein the change of the height position of the height-guiding frame (8) is made possible by means of an adjustment mechanism (11), wherein the pivot axis (7) of the height-guiding frame (8) is arranged coaxially with respect to the axis of rotation (4) of the treatment rotor (6), and a supporting arm (12) of the height-guiding frame (8), which supporting arm is mounted movably about the pivot axis (7), is lockable in a plurality of positions via a fixing device (13), wherein a holder (16) which accommodates the at least one guiding element (9) and is changeable in its position is mounted pivotably on the supporting arm (12) of the height-guiding frame (8), **characterized in that** the holder (16) has an elongated hole (32) which forms a sliding guide for changing the position of the holder (16).

2. Mobile treatment unit according to Claim 1, **characterized in that** the axis of rotation (4) of the treatment rotor (6) is designed as a pivot axis (7) of the height-guiding frame (8) or forms the pivot axis (7) .

3. Mobile treatment unit according to either of the preceding claims, **characterized in that** the height-guiding frame (8) has at least one guiding element (9) which is arranged in front of the treatment rotor (6), as viewed in the direction of movement (B) of the treatment unit (1), and at least one guiding element (10) behind the treatment rotor (6).

4. Mobile treatment unit according to one of the preceding claims, **characterized in that** a guiding element (9) which is arranged in front of the treatment rotor (6), as viewed in the direction of movement (B) of the treatment unit (1), is a wheel, preferably a pendulum wheel, and a guiding element (10) behind the treatment rotor (6) is preferably a depth-guiding roller.

5. Mobile treatment unit according to Claim 1, **characterized in that** the fixing device (13) consists of a preferably infinitely adjustable clamping mechanism or of a perforated sheet (14), into the holes of which a fixing pin (15) is insertable.

6. Mobile treatment unit according to one of the preceding claims, **characterized in that** the adjustment mechanism (11) has a spindle (18) which is activateable mechanically, hydraulically or by electric motor, and/or an adjusting element.

## Revendications

1. Unité de traitement mobile (1) destinée à l'entretien des espaces verts (2), notamment des pelouses et des prairies, laquelle comporte un rotor de traitement (6), orienté transversalement par rapport à sa direction de déplacement (B), logé dans un carter (3), monté à rotation autour d'un axe de rotation (4) et possédant des outils de traitement (5) ainsi qu'un cadre de guidage en hauteur (8) doté d'au moins un élément de guidage (9, 10) et dont la position en hauteur par rapport au carter (3) peut être modifiée autour d'un axe de pivotement (7), une modification de la position en hauteur du cadre de guidage en hauteur (8) étant rendue possible au moyen d'un mécanisme de positionnement (11), l'axe de pivotement (7) du cadre de guidage en hauteur (8) étant disposé de manière coaxiale par rapport à l'axe de rotation (4) du rotor de traitement (6), un bras porteur (12) du cadre de guidage en hauteur (8) mobile autour de l'axe de pivotement (7) pouvant être bloqué dans plusieurs positions par le biais d'un dispositif d'immobilisation (13), un support (16) qui accueille l'au moins un élément de guidage (9) et dont la position est modifiable étant monté avec mobilité de pivotement sur le bras porteur (12) du cadre de guidage en hauteur (8), **caractérisée en ce que** le support (16) possède un trou oblong (32) qui forme un guidage glissant pour le changement de position du support (16).

2. Unité de traitement mobile selon la revendication 1, **caractérisée en ce que** l'axe de rotation (4) du rotor de traitement (6) est réalisé sous la forme de l'axe de pivotement (7) du cadre de guidage en hauteur (8) ou forme l'axe de pivotement (7) .

3. Unité de traitement mobile selon l'une des revendications précédentes, **caractérisée en ce que** le cadre de guidage en hauteur (8) possède au moins un élément de guidage (9), disposé devant le rotor de traitement (6) vu dans la direction de déplacement (B) de l'unité de traitement (1), et au moins un élément de guidage (10) derrière le rotor de traitement (6).

4. Unité de traitement mobile selon l'une des revendications précédentes, **caractérisée en ce qu'**un élément de guidage (9) qui est disposé devant le rotor de traitement (6) vu dans la direction de déplacement (B) de l'unité de traitement (1) est une roue, de préférence une roue pendulaire, et un élément de guidage (10) derrière le rotor de traitement (6) est de préférence une roulette de guidage en profondeur.

5. Unité de traitement mobile selon la revendication 1, **caractérisée en ce que** le dispositif d'immobilisation (13) se compose d'un mécanisme de serrage positionnable de préférence en continu ou d'une tôle perforée (14) dans les trous de laquelle peut être introduit une goupille d'immobilisation (15).

6. Unité de traitement mobile selon l'une des revendications précédentes, **caractérisée en ce que** le mécanisme de positionnement (11) possède une broche (18) et/ou un élément de réglage à commande mécanique, hydraulique ou électromotorisée.
